# EUROPÄISCHE PATENTSCHRIFT

(11) **EP 2 294 316 B1**
(45) Veröffentlichungstag und Bekanntmachung des Hinweises auf die Patenterteilung: **12.10.2011**
(21) Anmeldenummer: 09769064.8
(22) Anmeldetag: 28.04.2009
(51) Int. Cl.: F04B 1/04, B60T 8/40

(54) **KOLBENPUMPE EINER HYDRAULISCHEN FAHRZEUGBREMSANLAGE**
PISTON PUMP OF A HYDRAULIC VEHICLE BRAKE SYSTEM
POMPE À PISTON D'UN SYSTÈME HYDRAULIQUE DE FREINAGE DE VÉHICULE

(30) Priorität: 27.06.2008 DE 102008002740
(43) Veröffentlichungstag der Anmeldung: 16.03.2011
(73) Patentinhaber: Robert Bosch GmbH, 70442 Stuttgart (DE)
(72) Erfinder: SCHULLER, Wolfgang, 74389 Cleebronn (DE)
(86) Internationale Anmeldenummer: PCT/EP2009/055104
(87) Internationale Veröffentlichungsnummer: WO 2009/156215

(56) Entgegenhaltungen:
- WO-A-03/004872
- WO-A-2004/088137
- DE-A1- 10 112 618
- US-A1- 2003 047 993

## Beschreibung

### Stand der Technik

Die Erfindung geht aus von einer Kolbenpumpe, insbesondere zur Bremsdruckerzeugung in einer hydraulischen Fahrzeugbremsanlage entsprechend den gattungsbildenden Merkmalen des Anspruchs 1.

Verschiedene Bauarten derartiger Kolbenpumpen sind beispielsweise bekannt aus der DE 101 12 618 A1. Diese bekannten Kolbenpumpen haben ein Pumpengehäuse mit einer daran ausgebildeten Aufnahmebohrung. In diese Aufnahmebohrung ist eine Laufbuchse der Kolbenpumpe eingesetzt. Die Laufbuchse führt einen Kolben, der von einem Exzenter zu einer hin- und her gehenden Hubbewegung antreibbar ist und der einen im Volumen veränderlichen Druckraum begrenzt. Ein Druckmittelfluss durch die Kolbenpumpe wird von Ventilen gesteuert. Das geförderte Druckmittel strömt über einen Abströmkanal der Pumpe einem Druckmittelkanal im Pumpengehäuse zu.

Die Ausführungen nach den Figuren 5, 8 und 9 zeigen Kolbenpumpen, bei denen eines der Ventile zur Steuerung des Druckmittelflusses durch die Kolbenpumpe losgelöst vom Kolben in einem Einbauraum eines Ventildeckels angeordnet ist. Der Ventildeckel verschließt die Aufnahmebohrung des Pumpengehäuses druckmitteldicht gegenüber der Umgebung. Diese Lösung hat gegenüber den anderen aufgezeigten Varianten den Vorteil, dass das Ventil der Kolbenbewegung nicht folgt und dass dadurch die am Kolben auftretenden Beschleunigungen bzw. Verzögerungen das Öffnungs- bzw. Schließverhalten des Ventils nicht beeinflussen.

Ein Druckmittelkanal des Pumpengehäuses mündet bei den Lösungen nach den Figuren 5, 8 und 9 jenseits des innenliegenden Endes des Ventildeckels in die Aufnahmebohrung ein, wobei sich ein im Ventildeckel angeordneter Abströmkanal innen und außen von Kragenelementen in einen ersten und zweiten Abschnitt unterteilen lässt. Allerdings ergibt sich dadurch ein relativ großer axialer Abstand von diesem Druckmittelkanal zu einer Außenseite des Pumpengehäuses. Dieser große Abstand wirkt sich negativ auf das Bauvolumen des Pumpengehäuses aus.

In der Offenlegungsschrift WO 20041088137 A1 wird ein Kolbenpumpe für eine hydraulische Fahrzeugbremsanlage mit einem Pumpengehäuse, einer im Pumpengehäuse angeordneten Aufnahmebohrung für die Kolbenpumpe und einem die Aufnahmebohrung nach außen verschließenden Ventildeckel beschrieben. Hierbei lassen sich im Ventildeckel angeordnete Abströmkanäle innen und außen von Kragenelementen in einen ersten und zweiten Abschnitt unterteilen.

In der Offenlegungsschrift US 200310047993 A1 wird eine gattungsgemäße Kolbenpumpe für eine hydraulische Fahrzeugbremsanlage mit einem Pumpengehäuse, einer im Pumpengehäuse angeordneten Aufnahmebohrung für die Kolbenpumpe und einem die Aufnahmebohrung nach außen verschließenden Ventildeckel beschrieben. Hierbei sind am Ventildeckel erste und zweite Kanalabschnitte eines Abströmkanals der Kolbenpumpe ausgebildet, wobei die ersten Kanalabschnitte am Innenumfang und die zweiten Kanalabschnitte am Außenumfang des Ventildeckels angeordnet sind, und wobei die Kanalabschnitte jeweils an dem im Inneren der Aufnahmebohrung liegenden Ende des Ventildeckels in die Aufnahmebohrung münden.

### Offenbarung der Erfindung

### Vorteile der Erfindung

Eine Kolbenpumpe gemäß den Merkmalen des Anspruchs 1 hat demgegenüber den Vorteil, dass der Abstand des pumpengehäuseseitigen Druckmittelkanals von einer Außenseite dieses Pumpengehäuses verringert ist. Der Druckmittelkanal liegt also näher zu einer der Außenseiten des Pumpengehäuses und ermöglicht dadurch eine bessere Ausnutzung des Bauraums des Pumpengehäuses, beispielsweise zur Anordnung von weiteren, nicht dargestellten Druckmittelkanälen oder dergleichen. Insgesamt kann dadurch ein kompakter gestaltetes Pumpengehäuse realisiert werden.

Bauvolumen, Materialbedarf und Gewicht sind insbesondere im Fahrzeugbau, aufgrund der begrenzten Einbauverhältnisse, ein wesentliches Wettbewerbskriterium.

Weitere Vorteile oder vorteilhafte Weiterbildungen der Erfindung ergeben sich aus den Unteransprüchen oder der nachfolgenden Beschreibung.

Durch die Merkmale des Anspruchs 2 lassen sich erste und zweite Kanalabschnitte des Abströmkanals vor dem Hintergrund einer Maximierung der zur Verfügung stehenden Querschnittsfläche vorteilhaft anordnen. Möglichst große Querschnittsflächen sind anzustreben, damit vom Abströmkanal keine Drosselwirkung ausgeht. Dahingehende Vorteile bieten auch die mit Anspruch 4 beanspruchte Ringnuten.

### Zeichnung

Ein Ausführungsbeispiel der Erfindung ist in der Zeichnung dargestellt und wird in der nachfolgenden Beschreibung detailliert erläutert.
- Die Figur 1: zeigt dazu eine erfindungsgemäß ausgebildete Kolben- pumpe im Längsschnitt.
- Figur 2: stellt einen Ventildeckel der Kolbenpumpe in der Drauf- sicht dar und
- Figur 3: zeigt diesen Ventildeckel zur Verdeutlichung nochmals in einer dreidimensionalen Darstellung.

### Beschreibung des Ausführungsbeispiels

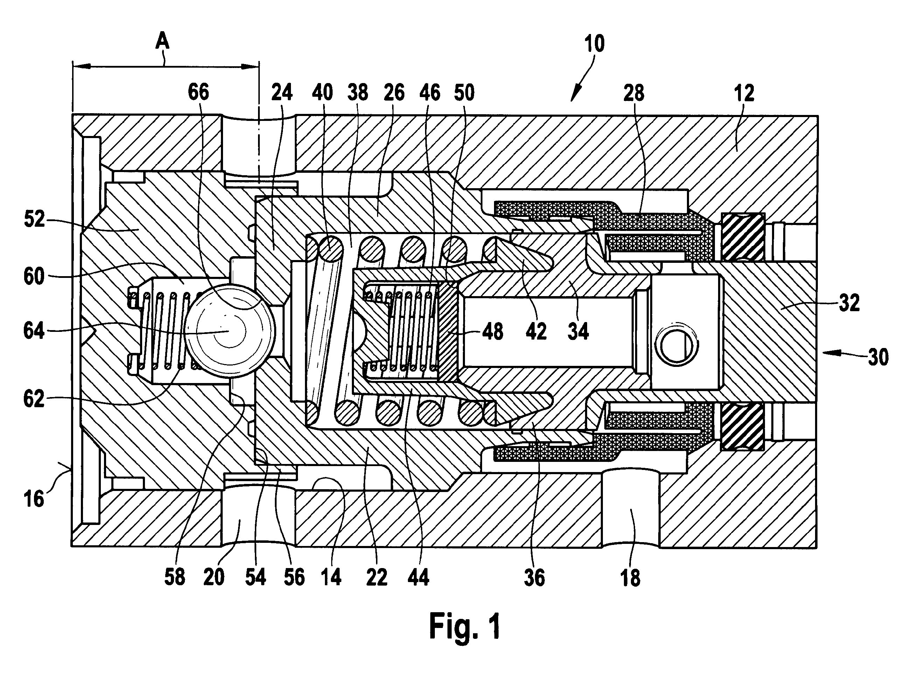

Die in der Figur 1 gezeigte Kolbenpumpe 10 ist in einem Hydroaggregat einer elektronisch schlupfregelbaren Fahrzeugbremsanlage angeordnet und dient zur Regelung des Bremsdrucks in wenigstens einer Radbremse, welche über Bremsleitungen an dieses Hydroaggregat angeschlossen ist. Das Hydroaggregat umfasst ein Pumpengehäuse 12 und ein daran befestigtes, nicht dargestelltes, elektronisches Steuergerät. Das Pumpengehäuse 12 ist unter anderem mit einer Aufnahmebohrung 14 versehen, in welche eine Kolbenpumpe eingebaut ist. Diese Aufnahmebohrung 14 ist in ihrem Innendurchmesser von außen nach innen mehrfach abgesetzt und mündet zu einer Außenseite 16 des Pumpengehäuses 12 hin aus. In die Aufnahmebohrung 14 münden quer verlaufende Druckmittelkanäle 18, 20 ein. Ein von der Außenseite 16 abgewandter erster Druckmittelkanal 18 bildet einen Zulauf und leitet der Kolbenpumpe 10 Druckmittel zu, während ein der Außenseite 16 des Hydroaggregats zugewandter zweiter Druckmittelkanal 20 als Ablauf fungiert und unter erhöhtem Druck stehendes Druckmittel von der Kolbenpumpe 10 wegführt.

In die Aufnahmebohrung 14 ist eine Laufbuchse 22 der Kolbenpumpe 10 eingesetzt. Diese Laufbuchse 22 ist becherförmig ausgebildet und weist einen mit einer Durchlassbohrung versehenen, ebenen Laufbuchenboden 24 und einen einteilig damit verbundenen hohlzylindrischen Laufbuchsenschaft 26 auf. Der Laufbuchsenboden 24 ist der Außenseite 16 des Pumpengehäuses 12 zugewandt. An seinem, dem Laufbuchsenboden 24 gegenüberliegenden Ende ist am Laufbuchsenschaft 26 ein hülsenförmiges Filterelement 28 angebracht. Letztes erstreckt sich über das Ende der Laufbuchse 22 hinaus, wobei der die Laufbuchse 22 überragende Abschnitt des Filterelements 28 im Außen- und Innendurchmesser eingezogen ist und dadurch einen Öffnungsquerschnitt des Laufbuchsenschafts 26 teilweise überdeckt. Das Filterelement 28 wirkt dadurch für einen in der Laufbuchse beweglich aufgenommenen Kolben 30 gleichzeitig als axialer Anschlag.

Der Kolben 30 ist aus zwei Kolbenteilen 32, 34 aufgebaut. Das erste Kolbenteil 32 steht gegenüber dem Filterelement 28 vor und bildet die Antriebsseite des Kolbens 30. Es ist zylindrisch ausgeführt und an seinem der Laufbuchse zugewandten Ende mit einer zentrisch angeordneten, sacklochförmigen Ausnehmung versehen. In diese Ausnehmung ragt das zweite, hülsenförmig ausgeführte Kolbenteil 34 abschnittsweise hinein. Am Außenumfang des zweiten Kolbenteils 34 ist ein umlaufender Dicht-/Führungsbereich 36 angeformt, welche an der Innenseite der Laufbuchse 22 anliegt. Dieser Dicht-/Führungsbereich 36 führt den Kolben 30 und dichtet gleichzeitig einen zwischen dem Kolben 30 und dem Laufbuchsenboden 24 befindlichen Druckraum 38 der Kolbenpumpe 10 ab. Durch den im Druckraum 38 herrschenden Druck wird der Dicht-/Führungsbereich 36 verstärkt gegen die Innenseite der Laufbuchse 22 gepresst.

Im Druckraum 38 ist eine Rückstellfeder 40 untergebracht, welche sich mit einem Ende am Laufbuchsenboden 24 abstützt und mit dem anderen Ende den Kolben 30 in Richtung eines die Kolbenbewegung bewirkenden Antriebselements (nicht gezeigt) beaufschlagt. Das kolbenseitige Ende der Rückstellfeder 40 ist mittelbar über ein topfförmiges Einlassventilgehäuse 42 eines Einlassventils 44 am Kolben 30 abgestützt. Das Einlassventilgehäuse 42 ist umfangseitig mit Durchbrüchen versehen und nimmt in seinem Inneren eine Einlassventilfeder 46 auf. Diese drückt ein Einlassventilglied 48, das beim Ausführungsbeispiel in Form einer Ventilplatte ausgebildet ist, gegen einen Einlassventilsitz 50. Letzterer ist am offenen Ende des zweiten Kolbenteils 34 ausgebildet.

Ein Ventildeckel 52 dichtet die Aufnahmebohrung 14 gegenüber der Umgebung ab. Dieser Ventildeckel 52 ist dazu in die Aufnahmebohrung 14 eingepresst und wird darin formschlüssig durch eine Verstemmung von Material des Pumpengehäuses gehalten. Der Ventildeckel 52 weist an seinem innenliegenden Stirnende eine umlaufende Ringschulter 54 und einen gegenüber der Ringschulter 54 axial vorstehenden Kragen 56 mit schmalem Querschnitt auf. Die Laufbuchse 22 und die Ringschulter 54 sind in ihren Durchmessern aufeinander abgestimmt, wodurch der Kragen 56 des Ventildeckels 52 die Laufbuchse 22 am Außenumfang umschließt. Die Laufbuchse 22 stützt sich mit ihrem Laufbuchsenboden 24 an der Ringschulter 54 des Ventildeckels 52 ab. Eine zentrisch am Ventildeckel 52 ausgebildete Flachsenkung 58 begrenzt den Innendurchmesser der Ringschulter 54 und bildet einen Hohlraum zwischen der Laufbuchse 22 und dem Ventildeckel 52 aus. Diese Flachsenkung 58 geht in eine sacklochartige Zentralausnehmung 60 des Ventildeckels 52 über. In diese Zentralausnehmung 60 ist eine Auslassventilfeder 62 eingebaut, welche einen Auslassventilkörper 64 beaufschlagt. Als Auslassventilkörper 64 dient eine Kugel, die mit einem, am Laufbuchsenboden 24 ausgebildeten Auslassventilsitz 66 zusammenwirkt.

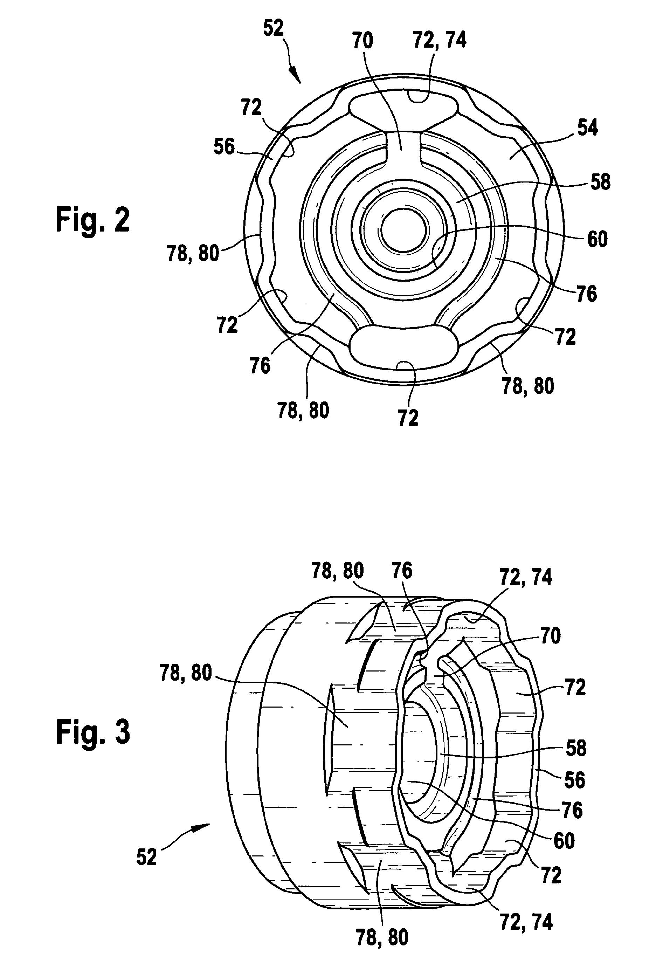

Figur 2 zeigt in einer Draufsicht, das im Inneren der Aufnahmebohrung liegende Stirnende des Ventildeckels 52. In dessen Zentrum befindet sich die Zentralausnehmung 60, welche, wie erläutert, später die Auslassventilfeder 62 aufnimmt. Die Zentralausnehmung 60 geht in die Flachsenkung 58 über. Die sich nach außen daran anschließende Ringschulter 54 ist mit einer radial verlaufenden Nut 70 versehen, welche eine erste, an der Innenseite des Kragens 56 ausgebildete Aussparung 72 hydraulisch kontaktiert. Diese erste Aussparung 72 erstreckt sich parallel zur Längsachse des Ventildeckels 52 über die gesamte Länge des Kragens 56 und bildet einen ersten Kanalabschnitt 74 eines Abströmkanals der Kolbenpumpe 10. Entlang des Innenumfangs des Kragens 56 sind mehrere derartiger erster Aussparungen 72 ausgebildet.

Eine ebenfalls an der Ringschulter 54 vorhandene Ringnut 76 stellt eine hydraulische Verbindung zwischen der radial verlaufenden Nut 70 und einer zweiten ersten Aussparung 72 an der Innenseite des Kragens 56 her. Vorzugsweise liegt diese weitere Aussparung 72 der ersten Aussparung 72 gegenüber.

Weitere in Längsachsenrichtung des Ventildeckels 52 verlaufende, zweite Aussparungen 78 sind an der Außenseite ausgebildet und schaffen zweite Kanalabschnitte 80 des Abströmkanals der Kolbenpumpe 10. Die außenseitigen, zweiten Aussparungen 78 haben eine größere axiale Länge als die innenseitigen ersten Aussparungen 72. Weiterhin sind die außenseitigen und die innenseitigen Aussparungen 72, 78 in Umfangsrichtung des Kragens 56 auf Lücke zueinander versetzt angeordnet, so dass der Kragen 56 von oben betrachtet eine gewellte Kontur aufweist. Eine derartige Kontur lässt sich beispielsweise durch spanende Bearbeitung des Ventildeckels 52 oder kostengünstiger umformtechnisch herstellen. Die außen- und innenseitigen Aussparungen 72, 78 münden am Ende des Ventildeckels 52 zur Aufnahmebohrung 14 des Pumpengehäuses 12 hin aus und sind dadurch hydraulisch zum Abströmkanal der Kolbenpumpe miteinander verbunden.

Wie der Figur 1 zu entnehmen ist, ist im Pumpengehäuse 12 ein Druckmittelkanal 20 vorhanden, der das von der Kolbenpumpe 10 geförderte Druckmittel abführt. Dieser Druckmittelkanal 20 verläuft quer zur Aufnahmebohrung 14 und mündet in diese ein. Die Mündungsstelle des Druckmittelkanals 20 ist aufgrund der außenseitigen Aussparungen 78 am Kragen 56 auf Höhe des Ventildeckels 52 angeordnet. Gegenüber bekannten Lösungen lässt sich dadurch der axiale Abstand A dieses Abströmkanals 20 zur Außenseite 16 des Pumpengehäuses 12 verkleinern. Aufgrund dieser Abstandsverringerung wird Platz zur Anordnung weiterer notwendiger Ausnehmungen im Inneren des Pumpengehäuses 12 gewonnen, wodurch das Pumpengehäuse 12 insgesamt kompakter darstellbar ist.

Die Figur 3 zeigt den bereits beschriebenen Ventildeckel 52 nochmals in perspektivischer Ansicht und bedarf deshalb keiner zusätzlichen Erläuterung. Die eingeführten Bezugszeichen wurden für Figur 3 beibehalten.

Die Funktion der Kolbenpumpe 10 ist dem Fachmann an sich bekannt und soll daher nachfolgend lediglich der Vollständigkeit halber kurz erläutert werden:
Der Kolben 30 der Kolbenpumpe 10 wird von einem nicht gezeigten Antriebselement, beispielsweise einem Exzenter oder einem Nocken, zu einer hin- und hergehenden Hubbewegung angetrieben. Aufgrund dieser Hubbewegung verändert sich das Volumen des von der Laufbuchse 22 und dem Kolben 30 begrenzten Druckraums 38. Wird der Kolben 30 vom Antriebselement entgegen der Kraft der Rückstellfeder 40 in Figur 1 nach links bewegt, verkleinert sich das Volumen des Druckraums 38 und im darin enthaltenen Druckmittel findet ein Druckanstieg statt. Zusammen mit der Kraft der Einlassventilfeder 46 bewirkt dieser Druckanstieg, dass das Einlassventilglied 48 gegen den Einlassventilsitz 50 gedrückt wird und diesen abdichtet.

Übersteigt der Druck im Druckraum 38 einen von der Auslegung der Auslassventilfeder 62 bestimmten Wert, so hebt das Auslassventilglied 64 vom Auslassventilsitz 66 ab und das Auslassventil öffnet. Das Druckmittel des Druckraums 38 strömt dann in den durch die Flachsenkung 58 im Ventildeckel 52 gebildeten Zwischenraum zwischen Laufbuchse 22 und Ventildeckel 52 ein und gelangt von dort aus über die radial verlaufende Nut 70 der Ringschulter 54 zu den ersten Kanalabschnitten 72 auf der Innenseite des Kragens 56 am Ventildeckel 52. Über diese ersten Kanalabschnitte 72 fließt das Druckmittel in die Aufnahmebohrung 14 der Kolbenpumpe 10, wird dort um 180° umgelenkt und strömt über die zweiten, an der Außenseite des Ventildeckels 52 ausgebildeten zweiten Kanalabschnitte 78 des Abströmkanals zum Druckmittelkanal 20 im Pumpengehäuse 12. Die 180°-Umlenkung des Druckmittelflusses in der Aufnahmebohrungen 14 wirkt sich dämpfend gegenüber Druckpulsationen aus, die sich aufgrund des zyklischen Antriebs einer Kolbenpumpe einstellen können.

Erreicht der vom Antriebselement beaufschlagte Kolben 30 seinen unteren Totpunkt kehrt sich seine Bewegungsrichtung um und das Volumen des Druckraums 38 vergrößert sich allmählich wieder. Entsprechend stellt sich nunmehr ein Unterdruck im Druckraum 38 ein. Dieser bewirkt zusammen mit der Auslassventilfeder 62 dass das Auslassventilglied 64 gegen den Auslassventilsitz 66 gepresst wird und das Auslassventil schließt. Gleichzeitig hebt das Einlassventilglied 48 vom Einlassventilsitz 50 entgegen der Kraft der Einlassventilfeder 46 ab und neues Druckmittel strömt über das hülsenförmige zweite Kolbenteil 34 in den Druckraum 38 der Kolbenpumpe 10 ein. Beide Vorgänge wiederholen sich zyklisch in Abhängigkeit der Betätigung des Kolbens 30 durch das Antriebselement. Selbstverständlich sind Änderungen oder Weiterbildungen am beschriebenen Ausführungsbeispiel denkbar, ohne vom Grundgedanken der Erfindung abzuweichen.

## Patentansprüche

1. Kolbenpumpe (10), insbesondere zur Bremsdruckerzeugung in einer hydraulischen Fahrzeugbremsanlage mit einem Pumpengehäuse (12), einer im Pumpengehäuse (12) angeordneten Aufnahmebohrung (14) für die Kolbenpumpe (10) und einem die Aufnahmebohrung (14) nach außen verschließenden Ventildeckel (52), wobei am Ventildeckel (52) erste und zweite Kanalabschnitte (72, 78) eines Abströmkanals der Kolbenpumpe (10) ausgebildet sind, wobei die ersten Kanalabschnitte (72) am Innenumfang und die zweiten Kanalabschnitte (78) am Außenumfang des Ventildeckels (52) angeordnet sind, und wobei die Kanalabschnitte (72, 78) jeweils an dem im Inneren der Aufnahmebohrung (14) liegenden Ende des Ventildeckels (52) in die Aufnahmebohrung (14) münden, **dadurch gekennzeichnet, dass** die ersten und die zweiten Kanalabschnitte (72, 78) in Umfangsrichtung des Ventildeckels (52) gegeneinander versetzt an dem im Inneren der Aufnahmebohrung (14) liegenden Ende dieses Ventildeckels (52) angeordnet sind.

2. Kolbenpumpe nach Anspruch 1, **dadurch gekennzeichnet, dass** ein zweiter Kanalabschnitt (78) des Abströmkanals der Kolbenpumpe (10) mit einem Druckmittelkanal (20) des Pumpengehäuses (12) hydraulisch verbunden ist, wobei dieser Druckmittelkanal (20) auf Höhe des Ventildeckels (52) in die Aufnahmebohrung (14) der Kolbenpumpe (10) mündet.

3. Kolbenpumpe nach Anspruch 1 oder 2, **dadurch gekennzeichnet, dass** der Ventildeckel (52) an seinem im Inneren der Aufnahmebohrung (14) liegenden Ende eine Ringschulter (54) und einen diese Ringschulter (54) an ihrem Außenumfang umgebenden, axial vorstehenden Kragen (56) aufweist.

4. Kolbenpumpe nach einem der Ansprüche 1 bis 3, **dadurch gekennzeichnet, dass** die Länge der ersten Kanalabschnitte (72) in Richtung der Längsachse des Ventildeckels (52) wenigstens der Länge des Kragens (56) entspricht und dass die Länge der zweiten Kanalabschnitte (78) wenigstens der Länge der ersten Kanalabschnitte (72) entspricht.

5. Kolbenpumpe nach Anspruch 3 oder 4, **dadurch gekennzeichnet, dass** die Ringschulter (54) des Ventildeckels (52) mit einer radial verlaufenden Nut (70) versehen ist, welche in einen ersten Kanalabschnitt (72) des Abströmkanals der Kolbenpumpe (10) einmündet.

6. Kolbenpumpe nach Anspruch 5, **dadurch gekennzeichnet, dass** an der Ringschulter (54) eine Ringnut (76) ausgebildet ist, welche mehrere erste Kanalabschnitte (72) hydraulisch miteinander kontaktiert.

7. Kolbenpumpe nach einem der Ansprüche 3 bis 6, **dadurch gekennzeichnet, dass** eine Laufbuchse (22) der Kolbenpumpe (10) an der Ringschulter (54) abgestützt ist und vom Kragen (56) des Ventildeckels (52) umschlossen ist.

8. Kolbenpumpe nach einem der Ansprüche 1 bis 7, **dadurch gekennzeichnet, dass** die ersten und die zweiten Kanalabschnitte (72, 78) des Ventildeckels (52) spanlos, durch ein umformtechnisches Arbeitsverfahren herstellbar ausgebildet sind.

## Claims

1. Piston pump (10), in particular for brake-pressure generation in a hydraulic vehicle brake system having a pump housing (12), a receiving bore (14) for the piston pump (10), which receiving bore (14) is arranged in the pump housing (12), and a valve cover (52) which closes the receiving bore (14) to the outside, first and second channel sections (72, 78) of an outflow channel of the piston pump (10) being formed on the valve cover (52), the first channel sections (72) being arranged on the inner circumference and the second channel sections (78) being arranged on the outer circumference of the valve cover (52), and the channel sections (72, 78) opening into the receiving bore (14) in each case at that end of the valve cover (52) which lies in the interior of the receiving bore (14), **characterized in that** the first and the second channel sections (72, 78) are arranged, offset with respect to one another in the circumferential direction of the valve cover (52), at that end of the said valve cover (52) which lies in the interior of the receiving bore (14).

2. Piston pump according to Claim 1, **characterized in that** a second channel section (78) of the outflow channel of the piston pump (10) is connected hydraulically to a pressure-medium channel (20) of the pump housing (12), the said pressure-medium channel (20) opening into the receiving bore (14) of the piston pump (10) at the level of the valve cover (52).

3. Piston pump according to Claim 1 or 2, **characterized in that**, at its end which lies in the interior of the receiving bore (14), the valve cover (52) has an annular shoulder (54) and an axially protruding collar (56) which surrounds the said annular shoulder (54) on its outer circumference.

4. Piston pump according to one of Claims 1 to 3, **characterized in that** the length of the first channel sections (72) in the direction of the longitudinal axis of the valve cover (52) corresponds at least to the length of the collar (56), and **in that** the length of the second channel sections (78) corresponds at least to the length of the first channel sections (72).

5. Piston pump according to Claim 3 or 4, **characterized in that** the annular shoulder (54) of the valve cover (52) is provided with a radially extending groove (70) which opens into a first channel section (72) of the outflow channel of the piston pump (10).

6. Piston pump according to Claim 5, **characterized in that** an annular groove (76) which connects a plurality of first channel sections (72) to one another hydraulically is formed on the annular shoulder (54).

7. Piston pump according to one of Claims 3 to 6, **characterized in that** a liner (22) of the piston pump (10) is supported on the annular shoulder (54) and is enclosed by the collar (56) of the valve cover (52).

8. Piston pump according to one of Claims 1 to 7, **characterized in that** the first and the second channel sections (72, 78) of the valve cover (52) are formed without the removal of material, such that they can be produced by a work process using forming technology.

## Revendications

1. Pompe à piston (10), en particulier pour générer de la pression de freinage dans une installation de freinage de véhicule hydraulique comprenant un carter de pompe (12), un alésage de logement (14) disposé dans le carter de pompe (12) pour la pompe à piston (10) et un couvercle de vanne (52) fermant l'alésage de logement (14) vers l'extérieur, des premiers et des seconds tronçons de canal (72, 78) d'un canal d'évacuation de la pompe à piston (10) étant réalisés sur le couvercle de vanne (52), les premiers tronçons de canal (72) et les seconds tronçons de canal (78) étant disposés respectivement sur le pourtour intérieur et sur le pourtour extérieur du couvercle de vanne (52), et les tronçons de canal (72, 78) débouchant à chaque fois sur l'extrémité, située à l'intérieur de l'alésage de logement (14), du couvercle de vanne (52) dans l'alésage de logement (14), **caractérisée en ce que** les premiers et les seconds tronçons de canal (72, 78) sont disposés, décalés les uns par rapport aux autres dans le sens périphérique du couvercle de vanne (52), sur l'extrémité, située à l'intérieur de l'alésage de logement (14), de ce couvercle de vanne (52).

2. Pompe à piston selon la revendication 1, **caractérisée en ce qu'**un second tronçon de canal (78) du canal d'évacuation de la pompe à piston (10) est relié hydrauliquement à un canal d'agent de pression (20) du carter de pompe (12), ce canal d'agent de pression (20) débouchant à la hauteur du couvercle de vanne (52) dans l'alésage de logement (14) de la pompe à piston (10).

3. Pompe à piston selon la revendication 1 ou 2, **caractérisée en ce que** le couvercle de vanne (52) présente sur son extrémité située à l'intérieur de l'alésage de logement (14) un épaulement annulaire (54) et une collerette (56) entourant cet épaulement annulaire (54) sur son pourtour extérieur et dépassant axialement.

4. Pompe à piston selon l'une quelconque des revendications 1 à 3, **caractérisée en ce que** la longueur des premiers tronçons de canal (72) dans le sens de l'axe longitudinal du couvercle de vanne (52) correspond à au moins la longueur de la collerette (56) et **en ce que** la longueur des seconds tronçons de canal (78) correspond au moins à la longueur du premier tronçon de canal (72).

5. Pompe à piston selon la revendication 3 ou 4, **caractérisée en ce que** l'épaulement annulaire (54) du couvercle de vanne (52) est doté d'une rainure (70) agencée radialement, laquelle débouche dans un premier tronçon de canal (72) du canal d'évacuation de la pompe à piston (10).

6. Pompe à piston selon la revendication 5, **caractérisée en ce qu'**une rainure annulaire (76), qui met en contact plusieurs premiers tronçons de canal (72) hydrauliquement les uns avec les autres, est conçue sur l'épaulement annulaire (54).

7. Pompe à piston selon l'une quelconque des revendications 3 à 6, **caractérisée en ce qu'**une garniture (22) de la pompe à piston (10) est soutenue sur l'épaulement annulaire (54) et est entourée par la collerette (56) du couvercle de vanne (52).

8. Pompe à piston selon l'une quelconque des revendications 1 à 7, **caractérisée en ce que** les premiers et les seconds tronçons de canal (72, 78) du couvercle de vanne (52) sont conçus de façon à pouvoir être fabriqués sans enlèvement de copeaux par un procédé de travail technique avec déformation.
